(19) Europäisches Patentamt
European Patent Office
Office européen des brevets

(11) Veröffentlichungsnummer: **0 414 054 A1**

(12) **EUROPÄISCHE PATENTANMELDUNG**

(21) Anmeldenummer: **90115293.4**

(51) Int. Cl.[5]: **C08G 75/02**

(22) Anmeldetag: **09.08.90**

(30) Priorität: **22.08.89 DE 3927657**

(43) Veröffentlichungstag der Anmeldung: **27.02.91 Patentblatt 91/09**

(84) Benannte Vertragsstaaten: **BE DE FR GB IT**

(71) Anmelder: **BAYER AG**
**D-5090 Leverkusen 1 Bayerwerk(DE)**

(72) Erfinder: **Köhler, Burkhard, Dr.**
**Mündelheimer Strasse 94**
**D-4150 Krefeld 11(DE)**
Erfinder: **Meyer, Rolf-Volker, Dr.**
**Buchheimerstr. 22**
**D-4150 Krefeld(DE)**

(54) **Hexahydrotriazintrion-haltige Polyarylensulfide und Verfahren zu ihrer Herstellung.**

(57) Die Erfindung betrifft neue Hexahydrotriazintrion-haltige, hochmolekulare Polyarylensulfide (PAS), vorzugsweise Polyphenylensulfide (PPS) und ein Verfahren zu ihrer Herstellung.

EP 0 414 054 A1

Xerox Copy Centre

# HEXAHYDROTRIAZINTRION-HALTIGE POLYARYLENSULFIDE UND VERFAHREN ZU IHRER HERSTELLUNG

Die Erfindung betrifft neue Hexahydrotriazintrion-haltige, hochmolekulare Polyarylensulfide (PAS), vorzugsweise Polyphenylensulfide (PPS) und ein Verfahren zu ihrer Herstellung.

Polyarylensulfide sind inerte, hochtemperaturbeständige Thermoplaste, die zudem einen hohen Füllgrad mit Glasfasern und/oder anderen organischen Füllstoffen erlauben. Der Einsatz dieser Polymeren, insbesondere des Polyparaphenylensulfids (PPS) nimmt vor allem in Bereichen zu, die bislang Duroplasten vorbehalten waren.

Ein Nachteil von PPS ist die unbefriedigende Zähigkeit, die jedoch bei steigender Schmelzviskosität zunimmt. Für manche Anwendungen ist auch die schnelle Kristallisation des PPS von Nachteil, z.B. bei der Herstellung von Folien. Auch die Neigung zur schnellen Kristallisation ist bei PPS-Typen mit hoher Schmelzviskosität geringer.

Verfahren zur Herstellung höhermolekularer, verzweigter Polyarylensulfide sind bekannt, z.B. US-A 3 354 129, 3 699 087, 3 524 835, 3 793 256, EP-A 53 385, 64 300 und 91 088. Bei diesen Verfahren werden die hohen Molekulargewichte durch einen Curingschritt, beispielsweise durch Curing von Polyarylensulfiden mit Sauerstoff, erzielt.

Nachteilig bei der Verwendung gasförmiger Reagenzien ist die schlechte Dosierbarkeit. Eine Nachvernetzung am fertigen Formteil ist kaum mehr möglich. Letzteres gilt auch für die Nachbehandlung mit Schwefel, der beim Curing-Prozeß größtenteils als Schwefelwasserstoff entweicht [Polym. Degradation and Stability 11 , 55 (1985)]. Diese Nachteile werden durch Verwendung von Disulfonsäuren zur nachträglichen Schmelzviskositätserhöhung vermieden (US-A 3 839 301). Jedoch bewirken Disulfonsäuren eine unkontrollierbar schnelle Erhöhung der Schmelzviskosität bei der Nachbehandlung. Ferner verbleibt nicht abreagiertes Curing-Reagenz im Polymer und kann einige Eigenschaften des PAS, z.B. die elektrischen Eigenschaften, verschlechtern.

Wünschenswert wären daher Polyarylensulfide, vorzugsweise Polyphenylensulfide, deren Molmasse sich ohne Zugabe von Curing-Reagenzien steigern läßt.

Es wurde nun gefunden, daß Hexahydrotriazintrion-haltige Polyarylensulfide, vorzugsweise Polyphenylensulfide, die durch Einbau von 1,3,5-Tri-(halogenaryl)-hexahydro-s- triazin-2,4,6-trionen, den Trimerisierungsprodukten der jeweiligen Halogenarylisocyanaten, in die PAS-Kette hergestellt werden, beim Erhitzen eine Erhöhung der Schmelzviskosität aufweisen.

Gegenstand der Erfindung sind daher verzweigte Polyarylensulfide, hergestellt durch Umsetzung von 0,1 -20 Mol-%, bevorzugt 1 - 5 Mol-%, Verbindungen der Formel (I)

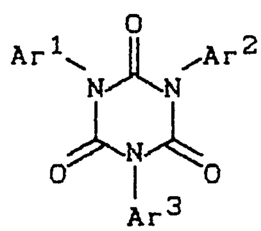

(I),

mit 80 - 99,9 Mol-% Verbindungen der Formel (III)

Hal-Ph-Hal (III),

in welchen

$Ar^1$ - $Ar^3$ gleich oder verschieden sein können und der allgemeinen Formel (II)

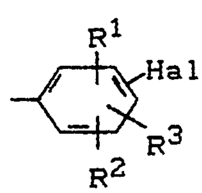

(II),

entsprechen

$R^1$ - $R^3$ gleich oder verschieden sein können und für einen $C_1$-$C_{22}$-Alkyl-, vorzugsweise Methyl-, einen $C_6$-

$C_{14}$-Aryl-, vorzugsweise Phenyl-, einen $C_7$-$C_{22}$-Aralkyl- oder Alkylarylrest, vorzugsweise einen Benzylrest oder für Hal stehen und zwei orthoständige Reste Glieder eines bis zu 7 Ringatome zählenden Rings sein können,

Hal Fluor, Chlor, Brom oder Iod, vorzugsweise Chlor, bedeutet und

Ph ein para- oder meta-Phenylen, ein beliebiger Naphthylen oder ein 4,4′-Diphenylenrest ist

in an sich bekannter Weise mit einem Sulfid-freisetzenden Reagenz und einer anorganischen Base in einem dipolar-aprotischen Lösungsmittel hergestellt werden.

Beispiele für Comonomere der Formel (I) sind 1,3,5-Tri-(m-chlorphenyl)-hexahydro-s-triazin-2,4,6-trion, 1,3,5-Tri-(p-chlorphenyl)-hexahydro-s-triazin-2,4,6-trion, 1,3,5-Tri-(3,4-dichlorphenyl)-hexahydro-s-triazin-2,4,6-trion, 1,3,5-Tri-(3-chlor-4-methylphenyl)-hexahydro-s-triazin-2,4,6-trion usw. Sie lassen sich in bekannter Weise z.B. aus den entsprechenden Halogenisocyanaten durch Erhitzen in Butylacetat, Chlorbenzol oder o-Dichlorbenzol mit einem basischen Katalysator herstellen.

Die erfindungsgemäßen Polyarylensulfide sind z.B. durch Umsetzung der Monomeren der Formel (I) und (II) mit einem sulfidfreisetzenden Reagenz und einer organischen Base in einem dipolar-aprotischen Solvens herstellbar, analog z.B. dem in der EP-A 171 021 beschriebenen Verfahren.

Als anorganische Base und sulfidfreisetzendes Reagenz werden in bekannter Weise bevorzugt Alkalimetallsulfide, besonders bevorzugt Natriumsulfid, eingesetzt. Als dipolar-aprotische Solventien werden z.B. N-Alkyllactame, bevorzugt N-Methyllactame, besonders bevorzugt N-Methylcaprolactam, eingesetzt.

Die Umsetzung kann in Gegenwart von Katalysatoren wie Caprolactam, Aminosäuren oder Alkaliacetaten, -chloriden, -fluoriden und -aryl- bzw. -alkylsulfonaten durchgeführt werden.

Die Reaktionstemperatur beträgt 150 - 300 °C. Die Reaktion kann bei Drücken von 1 - 50 bar durchgeführt werden.

Vom Alkalisulfid werden 1 bis 2, bevorzugt 1 bis 1,1 Äquivalente, bezogen auf die Summe der Monomeren der Formel (I) und (III), eingesetzt. Das Volumenverhältnis Lösungsmittel zu Feststoff liegt zwischen 1 : 1 und 10 : 1.

Die Alkalisulfide können in wasserfreier Form oder als Hydrate eingesetzt werden. Die Entwässerung kann in einem oder mehreren Schritten, bevorzugt durch z.B. azeotropes Abdestillieren des Wassers, z.B. mit den Monomeren der Formel (III) selbst als Schlepper, erfolgen. Zur Regenerierung der Alkalisulfide werden gegebenenfalls Alkalihydroxide eingesetzt.

Das Zusammengeben der Reaktanden kann im Prinzip in beliebiger Form erfolgen. Die Dihalogenaromaten der Formel (III) und die Comonomeren der Formel (I) können zusammen oder getrennt, kontinuierlich, in Portionen oder direkt auf einmal zu dem Alkalisulfid, dem Lösungsmittel oder portionsweise zu einem Teil davon gegeben werden. Vorzugsweise werden die Comonomeren der Formel (I) erst dann zugegeben, wenn sich kein Wasser mehr im Ansatz befindet.

Es können auch das Alkalisulfid zusammen mit dem Lösungsmittel oder einem Teil davon zu den Verbindungen der Formel (I) und (III) gegeben werden. Es können auch alle Reaktanden direkt zusammengegeben werden. Andere Kombinationen der Zugabe der Reaktanden sind ebenfalls möglich.

Die Dosierzeit der Reaktionspartner kann bis zu 10 h dauern, vorzugsweise 0,1 bis 5 h, die Nachkondensationszeit 3 - 24 h, vorzugsweise 6 -14 h.

Die Aufarbeitung des Reaktionsgemisches und die Isolierung der erfindungsgemäßen Polyarylensulfide kann in bekannter Weise erfolgen, z.B. indem das Reaktionsgemisch in einem Alkohol, z.B. Isopropanol, gefällt wird und das ausgefallene Polyarylensulfid, z.B. nach Ansäuern, elektrolytfrei gewaschen wird. Als Waschflüssigkeit wird vorzugsweise Wasser eingesetzt.

Die Schmelzviskosität der erfindungsgemäßen Polyarylensulfide nimmt durch eine thermische Nachbehandlung zu.

Sie wird durch Erhitzen der hergestellten Hexahydrotriazintrion-haltigen Polyarylensulfide auf 100 - 400 °C, vorzugsweise auf 200 - 330 °C für 1 - 100 Min. erhöht. Das Erhitzen kann unter Inertgas (z.B. $N_2$, Ar) oder im Vakuum vorgenommen werden. Die thermisch nachbehandelten Polyarylensulfide zeichnen sich durch eine sehr hohe Schmelzviskosität und eine niedrige Kristallisationsgeschwindigkeit aus.

Die erfindungsgemäßen Polyarylensulfide eignen sich alleine oder in Abmischung mit anderen Polymeren z.B. zur Herstellung von Formkörpern, z.B. nach dem Verfahren des Spritzgießens, der Extrusion, zur Herstellung von Fasern und Folien usw..

Die erfindungsgemäßen Polyarylensulfide können mit anderen Polyphenylensulfiden, z.B. mit solchen mit einer Schmelzviskosität von 5 - 500 Pa.s (306 °C/1.000 l/s) abgemischt werden.

Beispiele

Vergleichsbeispiel

Man legt 608,24 g (4,16 Mol) p-Dichlorbenzol und 2,5 l N-Methylcaprolactam in einem 4 l-Stahlkessel vor, erhitzt auf 216° C und tropft ein Gemisch aus 1.149,3 g (8,94 Mol) Natriumsulfidtrihydrat, 325 g Wasser, 4 g (0,1 Mol) Natriumhydroxid und 141,1 g (1,24 Mol) Caprolactam so zu, daß die Sumpftemperatur bei 215° C bleibt. Dabei destilliert das zugesetzte und das Hydratwasser ab. Während der Natriumsulfid-Zugabe wird 608,24 g (4,16 Mol) p-Dichlorbenzol zugetropft. Die Zugabe dauert 4 h. Anschließend wird noch 9 h auf 240° C erhitzt und der Ansatz in 40 l Isopropanol abgelassen. Nach Ansäuern auf pH 1 filtriert man das ausgefallene Polymer ab und wäscht mit destilliertem Wasser elektrolytfrei.

Beispiel 1

Man legt 0,1 Mol weniger p-Dichlorbenzol vor und versetzt dafür nach Entwässerung mit 0,1 Mol 1,3,5-Tri-(m-chlorphenyl)-hexahydro-s-triazin-2,4,6-trion.

Beispiel 2

Man legt 0,3 Mol weniger p-Dichlorbenzol vor und versetzt dafür nach Entwässern mit 0,3 Mol 1,3,5-Tri-(m-chlorphenyl)-hexahydro-s-triazin-2,4,6-trion.

Beispiel 3

Man legt 0,1 Mol weniger p-Dichlorbenzol vor und versetzt dafür nach Entwässerung mit 0,1 Mol 1,3,5-Tri-(3-chlor-4-methyl-phenyl)-hexahydro-s-triazin-2,4,6-trion.

Beispiel 4

Man legt 0,1 Mol weniger p-Dichlorbenzol vor und versetzt dafür nach Entwässerung mit 0,1 Mol 1,3,5-Tri-(3,4-dichlorphenyl)-hexahydro-s-triazin-2,4,6-trion.

Beispiel 5

Man legt 0,1 Mol weniger p-Dichlorbenzol vor und versetzt dafür nach Entwässerung mit 0,1 Mol 1,3,5-Tri-(4-chlorphenyl)-hexahydro-s-triazin-2,4,6-trion.

Beispiel 6

Man legt 0,3 Mol weniger p-Dichlorbenzol vor und versetzt dafür nach Entwässerung mit 0,3 Mol 1,3,5-Tri-(4-chlorphenyl)-hexahydro-s-triazin-2,4,6-trion.

Folgende Tabelle faßt die Schmelzviskositäten und thermischen Daten der Polyarylensulfide aus den Beispielen 1 - 5 sowie die Werte der thermisch nachbehandelten Proben zusammen. $T_k$ bedeutet Kristallisationstemperatur, $H_k$ Schmelzwärme und $T_s$ Schmelztemperatur. Die Werte wurden durch DSC-Messungen bestimmt. Die Schmelzviskosität wurde bei 306° C und 1.000 Pa Schubspannung bestimmt.

| Beispiel | Erhitzungsdauer bei 310 °C (min) | Schmelzvisk. (Pa.s) | $H_k$ (J/g) | $T_k$ (°C) | $T_s$ (°C) |
|---|---|---|---|---|---|
| Vergl. | 0 | 100 | 45 | 235 | 280 |
| 1 | 0 | 150 | 38 | 229 | 277 |
| 1 | 10 | 3.000 | 42 | 233 | 279 |
| 1 | 60 | 4.500 | 38 | 221 | 275 |
| 2 | 0 | 9 | 33 | 217 | 278 |
| 2 | 10 | 95 | 43 | 206 | 278 |
| 3 | 0 | 91 | 41 | 235 | 277 |
| 3 | 10 | 150 | 41 | 227 | 276 |
| 3 | 60 | 20.000 | 16 | 169 | 256 |
| 4 | 0 | 10 | 49 | 237 | 282 |
| 4 | 10 | 18 | 44 | 207 | 282 |
| 5 | 0 | 77 | 48 | 226 | 280 |
| 6 | 0 | 2 | 49 | 232 | 279 |

Beispiel 7

Man stellt ein Compound aus 40 % Glasfaser, 0,5 % Mikrotalk, 9,5 % des Polyarylensulfids nach Beispiel 3 und 50 % eines Polyphenylensulfids mit einer Schmelzviskosität von 44 Pas her.

Vergleichsbeispiel

Man stellt ein Compound aus 40 % Glasfaser, 0,5 Mikrotalk und 59,5 % eines Polyphenylensulfids mit einer Schmelzviskosität von 44 Pas her.

| Beispiel | Biegefestigkeit (MPa) | Randfaserdehnung (%) | E-Modul (MPa) | Izodschlagzähigkeit ($kJ/m^2$) |
|---|---|---|---|---|
| Vergl. | 249 | 1,9 | 13.000 | 30 |
| 7 | 280 | 2,1 | 13.000 | 38 |

**Ansprüche**

1. Verzweigte Polyarylensulfide, hergestellt durch Umsetzung von 0,1 - 20 Mol-%, aus Monomeren der Formel (I)

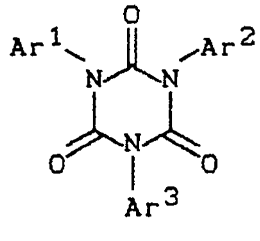

(I),

mit 80 - 99,9 Mol-% aus Monomeren der Formel (III)
Hal-Ph-Hal (III),
in welchen

$Ar^1$ - $Ar^3$ gleich oder verschieden sein können und der allgemeinen Formel (II)

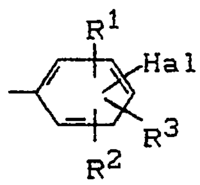

(II),

entsprechen,
$R^1$ - $R^3$ gleich oder verschieden sein können und für einen $C_1$-$C_{22}$-Alkyl-, einen $C_6$-$C_{14}$-Aryl-, einen $C_7$-$C_{22}$-Aralkyl- oder Alkylarylrest oder für Hal stehen und zwei ortho-ständige Reste Glieder eines bis zu 7 Ringatome zahlenden Rings sein können,
Hal Fluor, Chlor, Brom oder Iod, bedeutet und
Ph ein para- oder meta-Phenylen, ein beliebiger Naphthylen oder ein 4,4′-Diphenylenrest ist
in an sich bekannter Weise in Gegenwart einer anorganischen Base mit einem Sulfid-freistzenden Reagenz in einem dipolar aprotischen Lösungsmittel.

2. Polyarylensulfide, hergestellt durch Erhitzen der Polyarylensulfide nach Anspruch 1 auf 100 - 400 °C für 1 - 100 Min..

3. Mischungen der Polyarylensulfide nach Anspruch 1 mit Polyphenylensulfid.

4. Verwendung von Polyarylensulfiden gemäß Anspruch 1 zur Herstellung geformter Körper.

Europäisches Patentamt

# EUROPÄISCHER RECHERCHENBERICHT

Nummer der Anmeldung

**EP 90 11 5293**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 548 971 (R. MARTINOVICH et al.)<br>* Anspruch 1 *<br>– – – | 1,4 | C 08 G 75/02 |
| A | FR-A-1 430 160 (NORTON)<br>* Ansprüche; Beispiele *<br>– – – | 1,2 | |
| A | EP-A-0 266 662 (BAYER)<br>* Beispiel 5; Anspruch 1 *<br>– – – | 1,4 | |
| D,A | US-A-3 699 087 (H.V. WOOD et al.)<br>* Spalte 2, Zeilen 24-72; Ansprüche *<br>– – – – – | 1,4 | |

| RECHERCHIERTE SACHGEBIETE (Int. Cl.5) |
|---|
| C 08 G<br>C 08 K |

Der vorliegende Recherchenbericht wurde für alle Patentansprüche erstellt

| Recherchenort | Abschlußdatum der Recherche | Prüfer |
|---|---|---|
| Berlin | 07 November 90 | BOEKER R.B. |

KATEGORIE DER GENANNTEN DOKUMENTE
X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument